# EUROPÄISCHE PATENTSCHRIFT

(11) **EP 2 928 760 B1**
(45) Veröffentlichungstag und Bekanntmachung des Hinweises auf die Patenterteilung: **14.02.2018**
(21) Anmeldenummer: 13799254.1
(22) Anmeldetag: 26.11.2013
(51) Int. Cl.: B62D 27/02, B62D 27/06, F16B 15/00

(54) **SCHRAUBVERBUND**
SCREWED ASSEMBLY
ASSEMBLAGE VISSÉ

(30) Priorität: 10.12.2012 DE 102012222640
(43) Veröffentlichungstag der Anmeldung: 14.10.2015
(73) Patentinhaber: Bayerische Motoren Werke Aktiengesellschaft, 80809 München (DE)
(72) Erfinder: DÜNISCH, Robert, 81373 München (DE); GOTTMANN, Helmut, 84098 Hohenthann / Schmatzhausen (DE); HIRSCH, Peter, 85354 Freising (DE); KLAWUNN, Thomas, 84130 Dingolfing (DE); KOCH, Benjamin, 81249 München (DE); RAPP, Dieter, 86934 Reichling (DE); WENDLAND, Norbert, 80997 Muenchen (DE)
(86) Internationale Anmeldenummer: PCT/EP2013/074673
(87) Internationale Veröffentlichungsnummer: WO 2014/090562

(56) Entgegenhaltungen:
- WO-A1-98/18670
- DE-A1-102007 033 126
- DE-A1-102009 009 112
- US-A1- 2009 278 371

## Beschreibung

Die Erfindung bezieht sich auf einen Schraubverbund, bestehend aus mindestens einem vorgelochten, oberen und einem ungelochten, unteren Bauteil, einer zwischen diesen angeordneten Zwischenschicht sowie mehreren, jeweils über ein Vorloch im oberen Bauteil eingeführten und unter Zwischenlage der Zwischenschicht mit dem ungelochten Bauteil verschraubten Befestigungsschrauben, nach dem Oberbegriff des Patentanspruchs 1.

Aus der EP 2 311 713 A1 ist ein derartiger Schraubverbund für Kraftfahrzeug-Karosserieteile bekannt, bei welchem ein äußerer, vorgelochter Stahlflansch über selbstschneidende, von Seiten der Vorlöcher im Stahlflansch eingeführte Befestigungsschrauben und eine Klebstoffschicht mit einem innenliegenden Aluminiumrohr lastfest verbunden wird. Für eine ähnliche Dünnblech-Direktverschraubung wird auf die Druckschrift WO 98/18670 verwiesen. Dabei werden die Befestigungsschrauben aus Fertigungsgründen häufig im noch unausgehärteten Zustand der Klebstoffschicht festgezogen, mit der Folge, dass sich das Klebstoffmaterial unkontrolliert verlagern kann.

Weiterhin zeigt die Druckschrift US 2009/0278371 A1 einen mehrschichtigen Bauteilverbund bestehend aus einem Verbundmaterial, das zwischen einem ersten und zweiten metallischen Werkstück verklebt ist. Zur Ausbildung einer zusätzlichen Fügeverbindung sind in dem Verbundmaterial Durchgangslöcher vorgesehen, durch welche topfförmige Vorsprünge des ersten Werkstücks hindurchragen. So gelangen das erste und zweite Werkstück im Bereich der Vorlöcher in Anlage zueinander bzw. sind nur noch durch eine Klebstoffschicht getrennt. Die Vorsprünge werden mit dem zweiten Werkstück verbunden, z.B. verscheißt oder verschraubt.

Aufgabe der Erfindung ist es, einen Schraubverbund der beanspruchten Art so auszubilden, dass störende Materialbewegungen der beim Festziehen der Verschraubungen unausgehärteten Zwischen-, also insbesondere Klebstoffschicht auf baulich einfache Weise unterbunden werden.

Diese Aufgabe wird erfindungsgemäß durch den im Patentanspruch 1 gekennzeichneten Schraubverbund gelöst.

Erfindungsgemäß wird das Vorloch durch den dünnwandigen Vorlochsteg in Verbindung mit der den Vorlochsteg durchbohrenden Befestigungsschraube auf fertigungstechnisch einfache Weise sicher verschlossen und so wirksam verhindert, dass das Zwischenschichtmaterial aus dem Vorloch austritt und dann Materialpartikel von der sich drehenden Befestigungsschraube nach außen auf die Bauteiloberfläche oder in die Umgebung weggeschleudert werden können, aber dennoch sichergestellt, dass das Eindrehmoment und die Bohrlänge der selbstbohrenden Befestigungsschraube unabhängig von der Wandstärke des schraubkopfseitigen, oberen Bauteils nahezu unverändert innerhalb der durch die Verschraubung mit dem ungelochten, unteren Bauteil vorgegebenen Grenzen verbleiben.Der Vorlochsteg ist an einer von der zwischenschichtseitigen Bauteilfläche entfernten Stelle des Vorlochs angeordnet, wodurch eine durch den Vorlochsteg nach außen begrenzte Ausgleichskammer entsteht, in die überschüssiges Zwischenschicht-, nämlich insbesondere Klebstoffmaterial, beim Eindrehen der Befestigungsschraube zwängungsfrei ausweichen kann.

Im Hinblick auf eine weitere fertigungstechnische Vereinfachung ist das vorgelochte Bauteil zweckmäßigerweise ein Gussteil, vorzugsweise aus Aluminium, so dass der Vorlochsteg ohne nachträgliche spanende Bearbeitung gleich beim Gussvorgang am Bauteil mitangeformt werden kann.

Aus Gründen einer hochfesten und zugleich spänefreien Verschraubung schließlich empfiehlt es sich, als selbstbohrende Befestigungsschrauben Fließlochschrauben zu verwenden.

Die Erfindung wird nunmehr anhand mehrerer Ausführungsbeispiele in Verbindung mit der Zeichnung naher erläutert. Es zeigen in stark schematisierter Darstellung:
- **Fig. 1a, b**: ein erstes Ausführungsbeispiel eines erfindungsgemäßen Schraubverbunds vor (a) und nach (b) der Fertigstellung;
- **Fig. 2**: eine der Fig. 1 a entsprechende Darstellung eines weiteren Ausführungsbeispiels mit einer werkstoffmäßig anderen Bauteilkombination und einem etwa in der Vorlochmitte positionierten Vorlochsteg; und
- **Fig. 3**: eine nicht beanspruchte Ausgestaltung mit einem nochmals unterschiedlich positionierten Vorlochsteg und einer wiederum anderen Werkstoffkombination des Bauteilverbunds.

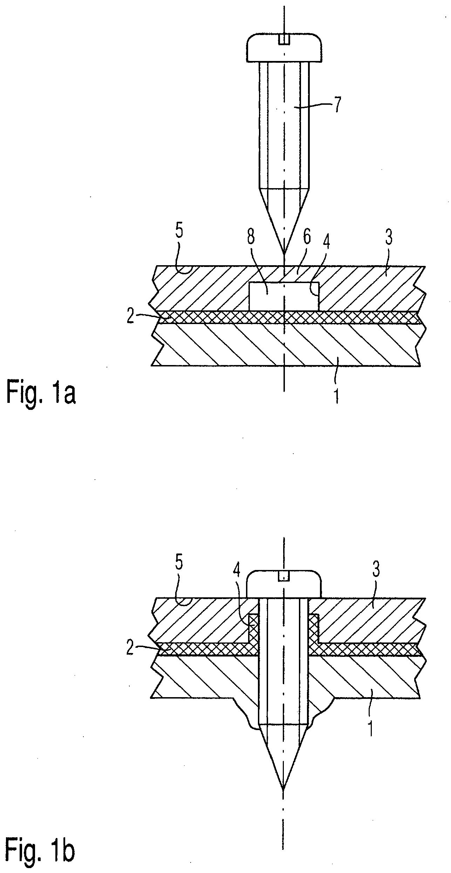

Der in Fig. 1 gezeigte Schraubverbund besteht aus einem ungelochten, unteren Stahlblech 1, einer auf dieses aufgebrachten Klebstoff-Zwischenschicht 2 und einem vorgelochten, oberen Bauteil 3 in Form eines Aluminium-Gussteils, dessen Vorlöcher 4 als Sacklöcher ausgebildet und auf Seiten der äußeren Bauteiloberfläche 5 durch einen dünnwandigen Vorlochsteg 6 verschlossen sind. Bei der Herstellung des Bauteils 3 werden die Vorlöcher 4 einschließlich der Vorlochstege 6 in der Gussform mitgeformt.

Verschraubt wird der zuvor (durch eine nicht gezeigte Spannvorrichtung) zusammengespannte Mehrschichtstapel 1, 2, 3 mit Hilfe von Fließlochschrauben 7, welche über den Vorlochsteg 6 und die Klebstoffschicht 2 in das ungelochte, untere Stahlblech 1 eingeschraubt werden. Dabei befindet sich der Klebstoff im noch unausgehärteten Zustand, und durch den Vorlochsteg 6 wird sichergestellt, dass Klebstoff aus der Zwischenschicht 2 nicht über das Vorloch 4 austreten und dann von der mit hoher Drehzahl angetriebenen Fließlochschraube 7 nach außen weggeschleudert werden kann. Wie Fig. 1 weiterhin zeigt, begrenzt der Vorlochsteg 6 eine zur Klebstoffschicht 2 hin geöffnete Ausgleichskammer 8, in welche der Klebstoff beim Festziehen der Verschraubung ausweichen kann, wie dies aus Fig. 1b, in der der Schraubverbund im fertiggestellten Zustand dargestellt ist, ersichtlich ist.

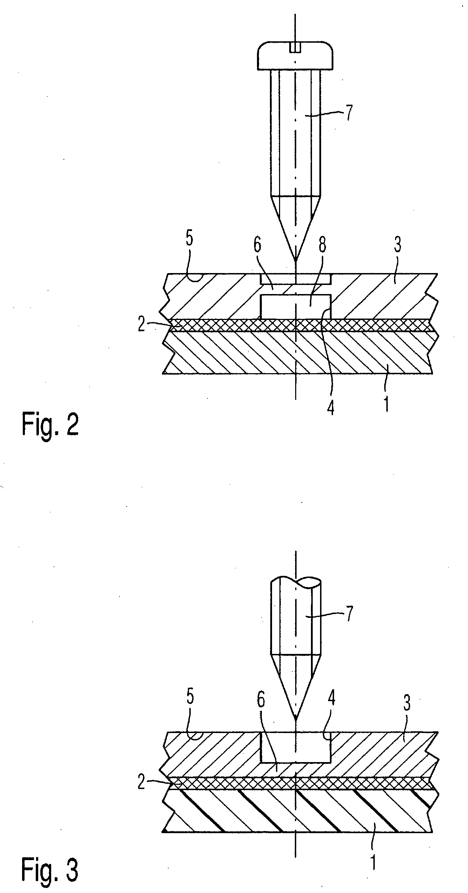

Fig. 2, wo die dem ersten Ausführungsbeispiel entsprechenden Komponenten durch das gleiche Bezugszeichen gekennzeichnet sind, zeigt die Möglichkeit, den Vorlochsteg 6 an einer anderen Stelle, nämlich z. B. in der Mitte des Vorlochs 4 zu positionieren und für den Schraubverbund in weiten Grenzen beliebige Bauteilkombinationen zu verwenden. So besteht- umgekehrt wie beim ersten Ausführungsbeispiel - das untere, ungelochte Bauteil 1 aus einem Aluminiumblech und das obere, vorgelochte Bauteil 3 aus einem Stahlblech, in welches die Vorlöcher 4 einschließlich des dünnwandigen Vorlochstegs 6 beim Walzvorgang oder durch spanende Bearbeitung eingeformt werden. Im Übrigen ist die Fertigungs- und Bauweise die gleiche wie bei dem ersten Ausführungsbeispiel.

In der nicht beanspruchten Ausgestaltung nach Fig. 3, in der die den oben beschriebenen Ausführungsbeispielen entsprechenden Komponenten wiederum durch das gleiche Bezugszeichen gekennzeichnet sind, ist der Vorlochsteg 6 an dem zwischenschichtseitigen Ende des Vorlochs 4 angeordnet, so dass eine klebstoffaufnehmende Ausgleichskammer fehlt und daher das Klebstoffvolumen beim Eindrehen der Fließlochschraube 7 vollständig in der Klebstoffschicht 2 verbleibt. Nach Fig. 3 ist für die Bauteile 1, 3 eine nochmals andere Werkstoffkombination gewählt, nämlich Aluminium für das vorgelochte, obere Bauteil 3 und ein Organoblech aus einem thermoplastischen Faserverbundwerkstoff für das ungelochte, untere Bauteil 1. Ansonsten ist die Herstellungs- und Bauweise die gleiche wie bei den oben beschriebenen Ausführungsbeispielen.

## Patentansprüche

1. Schraubverbund, bestehend aus mindestens einem vorgelochten, oberen und einem ungelochten, unteren Bauteil (3, 1), einer zwischen diesen angeordneten Zwischenschicht (2) sowie mehreren, jeweils über ein Vorloch (4) im oberen Bauteil (3) eingeführten und im unausgehärteten Zustand der Zwischenschicht mit dem ungelochten Bauteil (1) verschraubten, selbstbohrenden Befestigungsschrauben (7), wobei
die Vorlöcher (4) im oberen Bauteil (3) als durch einen Steg (6) verschlossene Sacklöcher ausgebildet sind, **dadurch gekennzeichnet, dass**
der Steg (6) an einer von der zwischenschichtseitigen Bauteilfläche entfernten Stelle des Vorlochs (4) angeordnet ist.

2. Mehrblechverbund nach Anspruch 1, **dadurch gekennzeichnet, dass** das vorgelochte Bauteil (3) ein Aluminiumgussteil ist.

3. Mehrblechverbund nach einem der vorhergehenden Ansprüche, **dadurch gekennzeichnet dass**
die Zwischenschicht (2) eine die Bauteile (1, 3) korrosions- und/oder lastfest verbindende Klebstoffschicht ist.

4. Mehrblechverbund nach einem der vorhergehenden Ansprüche, **dadurch gekennzeichnet dass**
als selbstbohrende Befestigungsschrauben (7) Fließlochschrauben vorgesehen sind.

## Claims

1. A screwed assembly, comprising at least one pre-punched, upper, and one non-punched, lower, component (3, 1), an intermediate layer (2) arranged therebetween and also a plurality of self-tapping fastening screws (7) which are introduced in each case via a pre-punched hole (4) in the upper component (3) and which in the uncured state of the intermediate layer are screwed to the non-punched component (1), wherein
the pre-punched holes (4) in the upper component (3) are formed as blind holes closed by a web (6), **characterised in that**
the web (6) is arranged on a point of the pre-punched hole (4) which is remote from the component face on the intermediate-layer side.

2. A multiple-sheet assembly according to Claim 1, **characterised in that** the pre-punched component (3) is an aluminium casting.

3. A multiple-sheet assembly according to one of the preceding claims, **characterised in that**
the intermediate layer (2) is an adhesive layer which joins the components (1, 3) in a corrosion-resistant and/or load-resistant manner.

4. A multiple-sheet assembly according to one of the preceding claims, **characterised in that**
flowhole screws are provided as self-tapping fastening screws (7).

## Revendications

1. Assemblage vissé constitué d'au moins un élément supérieur prépercé et d'au moins un élément inférieur non percé (3, 1), d'une couche intermédiaire (2) située entre ces éléments ainsi que de plusieurs vis de fixation auto-taraudeuses (7) respectivement introduites par un perçage préalable (4) dans l'élément supérieur (3) et vissées avec l'élément non percé (1) à l'état non durci de la couche intermédiaire,
les perçages préalables (4) de l'élément supérieur (3) étant réalisés sous la forme de perçages borgnes fermés par une barrette (6), **caractérisé en ce que** la barrette (6) est située à un emplacement du perçage préalable (4) éloigné de la surface de l'élément située côté couche intermédiaire.

2. Assemblage multitôles conforme à la revendication 1,
**caractérisé en ce que**
l'élément préalablement percé (3) et un élément en fonte d'aluminium.

3. Assemblage multitôles conforme à l'une des revendications précédentes,
**caractérisé en ce que**
la couche intermédiaire (2) est une couche d'adhésif reliant les éléments (1, 3) de façon à résister à la corrosion et/ou aux charges.

4. Assemblage multitôles conforme à l'une des revendications précédentes,
**caractérisé en ce qu'**
en tant que vis de fixation auto-taraudeuses (7) on utilise des vis de perforation par écoulement.
